# FASCICULE DE BREVET EUROPEEN

(11) **EP 3 023 309 B1**
(45) Date de publication et mention de la délivrance du brevet: **19.08.2020**
(21) Numéro de dépôt: 15190830.8
(22) Date de dépôt: 21.10.2015
(51) Int. Cl.: B60S 1/38

(54) **DISPOSITIF D'ESSUYAGE POUR VÉHICULE AUTOMOBILE**
REINIGUNGSVORRICHTUNG FÜR KRAFTFAHRZEUG
WIPING DEVICE FOR A MOTOR VEHICLE

(30) Priorité: 20.11.2014 FR 1461222
(43) Date de publication de la demande: 25.05.2016
(73) Titulaire: Valeo Systèmes d'Essuyage, 78322 Le Mesnil Saint Denis (FR)
(72) Inventeur: GAUCHER, Vincent, 63720 ENNEZAT (FR)
(74) Mandataire: Valeo Vision

(56) Documents cités:
- WO-A2-2008/021991
- FR-A1- 2 987 016
- US-A1- 2010 125 967

## Description

La présente invention se rapporte à un dispositif d'essuyage, un bras d'entrainement pour un dispositif d'essuyage et un balai d'essuie-glace.

Depuis plusieurs années, les essuie-glaces et les systèmes d'essuyage pour véhicule automobile ont fait des progrès importants.

Le document US 2010/125967 A1 décrit un dispositif d'essuyage doté d'un balai d'essuie-glace à commande électromagnétique.

Une des avancées majeures concerne l'essuyage des vitres, comme par exemple le pare-brise, par temps froid, notamment quand il y a un dépôt de glace ou de givre sur la vitre.

Afin que l'utilisateur puisse rapidement retrouver une visibilité, il a été proposé de chauffer par exemple le liquide lave glace pour faire fondre rapidement la glace ou les cristaux de glace sur la vitre.

Ce liquide lave-glace peut être chauffé dans son réservoir ou lors de son parcours dans des conduites hydrauliques.

Toutefois, il s'est avéré judicieux d'équiper les balais eux-mêmes d'un système de chauffage, par exemple de résistances chauffantes ou d'éléments céramiques à coefficient de température positive (PTC), en contact direct ou non avec le liquide lave-glace pour chauffer celui-ci ou l'environnement immédiat du balai, le liquide lave-glace étant amené jusqu'au balai lui-même, afin d'être projeté sur la vitre juste en amont de la lame d'essuyage.

La demande FR 2 987 016 au nom de la Demanderesse décrit par exemple un balai d'essuyage équipé d'éléments chauffants, par exemple radiants, permettant de faire fondre la neige, du gel, de la glace ou du givre, présent sur une vitre automobile.

Dans ce cas, des fils conducteurs électriques doivent être amenés jusqu'au balai pour permettre l'alimentation électrique des éléments chauffants.

Or, pour un utilisateur, il peut s'avérer compliqué de changer le balai en cas d'usure s'il faut de plus faire attention à connecter non seulement mécaniquement le balai au bras de balai, mais aussi électriquement. Dans certains cas, l'utilisateur peut oublier de réaliser la connexion électrique ou dans d'autres cas, s'il ne fait pas attention, créer un dysfonctionnement si de l'eau s'infiltre dans une des parties des connecteurs électriques.

De plus, étant donné que cette partie de connexion entre le bras de balai et le balai est exposé à toutes les intempéries, le connecteur restant côté bras de balai peut s'altérer, par exemple par corrosion ou des dépôts de saletés, et rendre l'alimentation des éléments chauffants portés par les balais inopérante.

Le document WO08021991 propose de réaliser une connexion électrique inductive entre le pare-brise et le balai.

A cet effet, une bobine émettrice est attachée au pare-brise, à l'intérieur de l'habitacle pour chauffer par induction magnétique le balai.

Certes, cette solution permet de s'affranchir des problèmes de connexion électrique au niveau du connecteur mécanique entre le balai et le bras de balai, mais cette solution ne donne pas satisfaction étant donné que le système de ce document ne fonctionne qu'à l'arrêt du dispositif d'essuyage lorsque le balai est en vis-à-vis de la bobine émettrice attachée au pare-brise.

Il en résulte de plus que le fluide de lavage ne peut pas être chauffé en cours d'opération des balais d'essuie-glace.

Par ailleurs, au vu des normes existantes, il est difficile de placer des éléments sur le pare-brise, même en périphérie, pour ne pas réduire la visibilité du conducteur.

La présente invention se propose de remédier au moins partiellement aux inconvénients ci-dessus mentionnés en présentant une solution permettant une connexion électrique efficace, même lorsque le dispositif d'essuyage est en opération et qui permet un remplacement aisé d'un balai lors d'un changement de celui-ci.

A cet effet, l'invention a pour objet un dispositif d'essuyage comprenant
- un bras d'entrainement configuré pour transmettre un mouvement de balayage et présentant une extrémité longitudinale,
- un balai d'essuie-glace
- un dispositif de fixation disposé entre l'extrémité longitudinale du bras et le balai d'essuie-glace,
dans lequel le balai est équipé d'au moins un élément électrique, caractérisé en ce que l'extrémité longitudinale du bras est équipée d'une bobine émettrice et en ce que le balai est équipé au niveau du dispositif de fixation d'une bobine réceptrice, la coopération de la bobine émettrice avec la bobine réceptrice permettant d'assurer l'alimentation dudit élément électrique par induction magnétique.

Ainsi, la connexion électrique peut être réalisée de façon transparente pour l'utilisateur lors de la réalisation de la connexion mécanique entre le bras de balai et le balai.

Le dispositif d'essuyage selon l'invention peut comporter en outre une ou plusieurs des caractéristiques suivantes prises seules ou en combinaison :
Le dispositif de fixation comprend par exemple un adaptateur destiné à être fixé à l'extrémité longitudinale du bras et un connecteur articulé sur l'adaptateur et destiné à être fixé au balai d'essuie-glace, et la bobine réceptrice est portée par l'adaptateur ou le connecteur.

L'extrémité longitudinale du bras est en forme de chape de support.

La bobine émettrice peut être disposée sur une face inférieure de la chape de support en vis-à-vis de l'adaptateur.

La bobine réceptrice peut être disposée sur une face inférieure du connecteur en vis-à-vis du balai ou alors sur une vertèbre du balai au niveau du connecteur.

Pour la facilité de fabrication et la protection des bobines, la bobine émettrice est surmoulée dans la chape de support et la bobine réceptrice est surmoulée dans le connecteur.

La bobine réceptrice est par exemple raccordée électriquement à l'élément électrique.

L'élément électrique est par exemple un élément chauffant, notamment une résistance ou une céramique à coefficient de température positive ou peut comprendre un capteur de mesure.

L'invention concerne également un bras d'entrainement pour un dispositif d'essuyage tel que défini ci-dessus, configuré pour transmettre un mouvement de balayage et présentant à une extrémité une chape de support, caractérisé en ce que la chape de support est équipée d'une bobine émettrice permettant d'assurer une alimentation électrique par induction magnétique.

L'invention concerne également un balai d'essuie-glace pour un dispositif d'essuyage tel que défini ci-dessus, comprenant un connecteur fixé au balai d'essuie-glace le connecteur étant apte à être articulé sur un adaptateur fixé à l'extrémité longitudinale d'un bras d'essuie-glace, ledit balai d'essuie-glace étant équipé d'au moins un élément électrique, le balai d'essuie-glace comprenant une bobine réceptrice disposée au niveau du connecteur et permettant d'assurer une alimentation électrique par induction magnétique de l'élément électrique, la bobine réceptrice étant raccordée électriquement à l'élément électrique par des fils électriques, caractérisé en ce que ladite bobine réceptrice est disposée sur la face inférieure du connecteur, c'est-à-dire au niveau de la face en vis-à-vis du balai.

D'autres avantages et caractéristiques apparaîtront à la lecture de la description de l'invention, ainsi que des dessins annexés sur lesquels :
- la figure 1 est une vue schématique en perspective d'un exemple de réalisation d'un dispositif d'essuyage selon l'invention,
- la figure 2 est une vue partielle de la figure 1 montrant seulement le bras, l'adaptateur et le connecteur,
- la figure 3 montre une vue schématique en perspective d'un balai équipé d'un connecteur, et
- la figure 4 montre les mêmes éléments que dans la figure 2 par une vue de dessous.

Sur ces figures, les éléments identiques portent les mêmes numéros de référence.

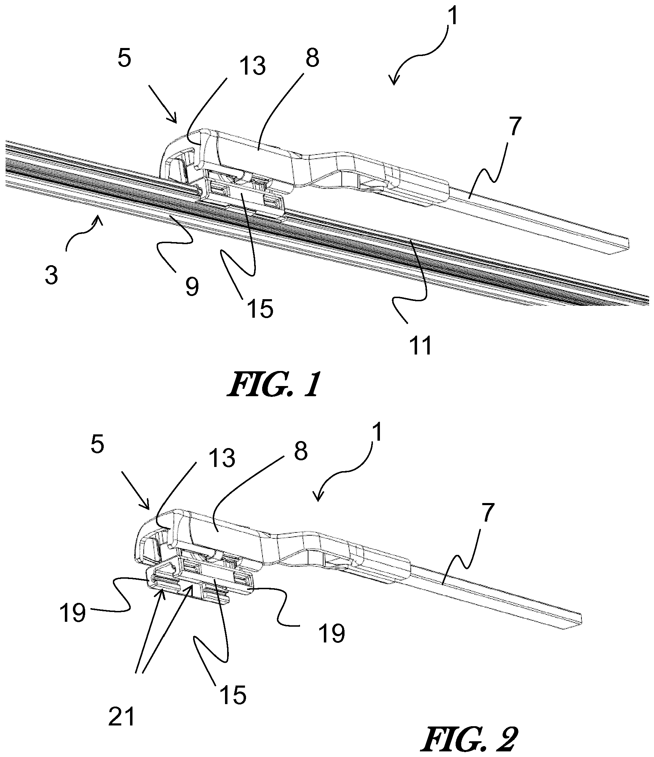

La figure 1 montre un dispositif d'essuyage 1 ou essuie-glace comprenant un balai 3, un dispositif de fixation 5 et un bras de balai 7 comportant à une extrémité une chape de support 8 raccordée au balai 3 par le dispositif de fixation 5.

Le balai 3 comprend notamment une lame racleuse 9 ou lame d'essuyage et une ou plusieurs vertèbres 11, dans le présent cas une vertèbre 11 sous forme d'une lame métallique, donnant au balai 3 un cintrage lui permettant d'être appliqué correctement sur un pare-brise. Le balai 3 peut aussi comprendre un déflecteur et/ou des embouts maintenant en particulier la lame racleuse 9 et la / les vertèbres 11 ensemble.

Le dispositif de fixation 5 comprend d'une part un adaptateur 13 porté par le bras de balai 7 et d'autre part un connecteur 15 fixé, sans degrés de liberté au balai 3.

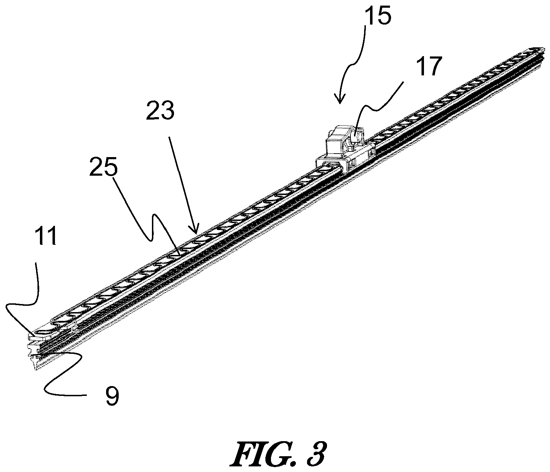

La figure 2 montre seulement le connecteur 15 qui est articulé en pivotement par un axe 17 (voir figure 3) sur l'adaptateur 13 porté par le bras de balai 7.

Comme cela est montré sur la figure 3, le connecteur 15 est fixé sans degrés de liberté sur le balai 3. A cet effet, il présente deux brides 19 symétriques (voir figures 1 et 2), prenant en sandwich le balai 3 au niveau de la vertèbre 11 du balai 3 dans un des logements 21 ménagés dans les brides 19 sous forme de rainures.

Sur la figure 3, on voit en outre un élément électrique 23 disposé sur la vertèbre 11 du balai 3 et qui est dans le présent cas un élément chauffant 25 réalisé par exemple sous forme d'une résistance ou d'un fil résistif.

L'élément électrique 23 peut également être une céramique à coefficient de température positive comme élément chauffant ou un capteur de mesure, par exemple un capteur capacitif permettant de mesurer l'état mouillé ou non du pare-brise à proximité du balai.

L'alimentation électrique de l'élément électrique 23 est réalisée à l'aide d'un transfert d'énergie électrique par induction magnétique.

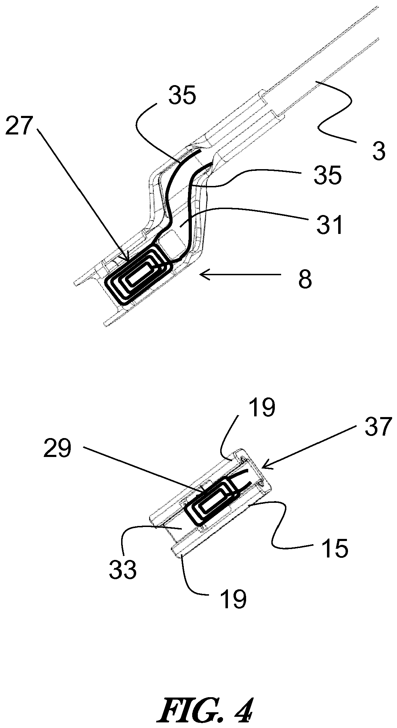

A cet effet, comme représenté à la figure 4, la chape de support 8 est équipée d'une bobine émettrice 27 et le dispositif de fixation 5, ici le connecteur 15 est équipé d'une bobine réceptrice 29.

La coopération de la bobine émettrice 27 avec la bobine réceptrice 29 permet donc d'assurer l'alimentation de l'élément électrique 23 par induction magnétique.

La bobine émettrice 27 est disposée sur la face inférieure 31 de la chape de support 8, c'est-à-dire la face qui se trouve en vis-à-vis de l'adaptateur 13.

La bobine réceptrice 29 est disposée sur la face inférieure 33 du connecteur 15, c'est-à-dire au niveau de la face en vis-à-vis du balai 3.

Les bobines émettrice 27 et réceptrice 29 peuvent être fixées par exemple par collage.

Selon une variante non représentée, la bobine émettrice 27 est surmoulée dans la chape de support 8 et la bobine réceptrice 29 est surmoulée dans le connecteur 15.

La bobine émettrice 27 est reliée par exemple via des fils électriques 35 au réseau électrique du véhicule automobile.

La bobine réceptrice 29 quant à elle est raccordée électriquement à l'élément électrique 23 par des fils électriques 37.

Selon une variante non représentée, la bobine émettrice 27 fait partie intégrante de l'élément chauffant 25, c'est-à-dire que l'élément chauffant 25 est par exemple réalisé sous forme d'un fil résistif qui au niveau du connecteur 15 est enroulé de façon à servir de bobine réceptrice 29.

Selon encore un autre développement, la vertèbre 11 est électriquement isolante ou a été rendue électriquement isolante, par exemple par dépôt d'une couche isolante, et l'élément chauffant 25 est réalisé par sérigraphie sur la vertèbre 11, au niveau du connecteur 15, le motif de sérigraphie étant conformé dans des enroulements aptes à servir de bobine réceptrice 29.

Du fait que les bobines émettrice 27 et réceptrice 29 sont respectivement intégrées au niveau de la chape de support 8 et du connecteur 15, lors d'un changement de balai, l'utilisateur n'a plus à se préoccuper du raccordement électrique du balai 3 qui se fait automatiquement lors de la fixation mécanique entre l'adaptateur 13 et le connecteur 15.

## Revendications

1. Dispositif d'essuyage (1) comprenant
- un bras d'entrainement (7) configuré pour transmettre un mouvement de balayage et présentant une extrémité longitudinale (8),
- un balai (3) d'essuie-glace
- un dispositif de fixation (5) disposé entre l'extrémité longitudinale (8) du bras (7) et le balai (3) d'essuie-glace,
dans lequel le balai (3) est équipé d'au moins un élément électrique (23), **caractérisé en ce que** l'extrémité longitudinale (8) du bras (7) est équipée d'une bobine émettrice (27) et **en ce que** le balai (3) est équipé au niveau du dispositif de fixation (5) d'une bobine réceptrice (29), la coopération de la bobine émettrice (27) avec la bobine réceptrice (29) permettant d'assurer l'alimentation dudit élément électrique (23) par induction magnétique.

2. Dispositif d'essuyage selon la revendication 1, **caractérisé en ce que** le dispositif de fixation (5) comprend un adaptateur (13) destiné à être fixé à l'extrémité longitudinale (8) du bras (7) et un connecteur (15) articulé sur l'adaptateur et destiné à être fixé au balai (3) d'essuie-glace, et **en ce que** la bobine réceptrice est portée par l'adaptateur (13) ou le connecteur (15).

3. Dispositif d'essuyage selon la revendication 1 ou 2, **caractérisé en ce que** l'extrémité longitudinale (8) du bras (7) est en forme de chape de support et la bobine émettrice (27) est disposée sur une face inférieure (31) de la chape de support (8) en vis-à-vis de l'adaptateur (13).

4. Dispositif selon la revendication 2 ou 3, **caractérisé en ce que** la bobine réceptrice (29) est disposée sur une face inférieure (33) du connecteur (15) en vis-à-vis du balai (3).

5. Dispositif d'essuyage selon la revendication 2 ou 3, **caractérisé en ce que** la bobine réceptrice (29) est disposée sur une vertèbre (11) du balai (3) au niveau du connecteur (15).

6. Dispositif selon l'une quelconque des revendications 2 à 4, **caractérisé en ce que** la bobine émettrice (27) est surmoulée dans la chape de support (8) et **en ce que** la bobine réceptrice (29) est surmoulée dans le connecteur (15).

7. Dispositif selon l'une quelconque des revendications 1 à 6, **caractérisé en ce que** la bobine réceptrice (29) est raccordée électriquement à l'élément électrique (23).

8. Dispositif selon l'une quelconque des revendications 1 à 7, **caractérisé en ce que** l'élément électrique (23) est un élément chauffant (25), notamment une résistance ou une céramique à coefficient de température positive.

9. Dispositif selon l'une quelconque des revendications 1 à 7, **caractérisé en ce que** l'élément électrique (23) comprend un capteur de mesure.

10. Bras d'entrainement (7) pour un dispositif d'essuyage (1) selon l'une quelconque des revendications 1 à 9, configuré pour transmettre un mouvement de balayage et présentant à une extrémité une chape de support (8), **caractérisé en ce que** la chape de support (8) est équipée d'une bobine émettrice (27) permettant d'assurer une alimentation électrique par induction magnétique.

11. Balai d'essuie-glace pour un dispositif d'essuyage selon l'une quelconque des revendications 1 à 9, comprenant un connecteur (15) fixé au balai (3) d'essuie-glace, le connecteur étant apte à être articulé sur un adaptateur fixé à l'extrémité longitudinale (8) d'un bras d'essuie-glace, ledit balai étant équipé d'au moins un élément électrique (23), ledit balai comprenant une bobine réceptrice disposée au niveau du connecteur (15) et permettant d'assurer une alimentation électrique par induction magnétique de l'élément électrique (23), la bobine réceptrice étant raccordée électriquement à l'élément électrique (23) par des fils électriques (37), **caractérisé en ce que** ladite bobine réceptrice (29) est disposée sur la face inférieure (33) du connecteur (15), c'est-à-dire au niveau de la face en vis-à-vis du balai (3).

## Patentansprüche

1. Wischvorrichtung (1), welche umfasst:
- einen Antriebsarm (7), der dafür ausgelegt ist, eine Wischbewegung zu übertragen, und ein Längsende (8) aufweist,
- ein Scheibenwischerblatt (3),
- eine Befestigungsvorrichtung (5), die zwischen dem Längsende (8) des Armes (7) und dem Scheibenwischerblatt (3) angeordnet ist,
wobei das Wischerblatt (3) mit wenigstens einem elektrischen Element (23) ausgestattet ist, **dadurch gekennzeichnet, dass** das Längsende (8) des Armes (7) mit einer Sendespule (27) ausgestattet ist, und dadurch, dass das Wischerblatt (3) an der Befestigungsvorrichtung (5) mit einer Empfangsspule (29) ausgestattet ist, wobei das Zusammenwirken der Sendespule (27) mit der Empfangsspule (29) ermöglicht, die Stromversorgung des elektrischen Elements (23) durch magnetische Induktion sicherzustellen.

2. Wischvorrichtung nach Anspruch 1, **dadurch gekennzeichnet, dass** die Befestigungsvorrichtung (5) einen Adapter (13), der dazu bestimmt ist, am Längsende (8) des Armes (7) befestigt zu werden, und einen Verbinder (15), der am Adapter angelenkt ist und dazu bestimmt ist, am Scheibenwischerblatt (3) befestigt zu werden, umfasst, und dadurch, dass die Empfangsspule vom Adapter (13) oder vom Verbinder (15) getragen wird.

3. Wischvorrichtung nach Anspruch 1 oder 2, **dadurch gekennzeichnet, dass** das Längsende (8) des Armes (7) die Form einer Traggabel hat und die Sendespule (27) auf einer Unterseite (31) der Traggabel (8) gegenüber dem Adapter (13) angeordnet ist.

4. Vorrichtung nach Anspruch 2 oder 3, **dadurch gekennzeichnet, dass** die Empfangsspule (29) auf einer Unterseite (33) des Verbinders (15) gegenüber dem Wischerblatt (3) angeordnet ist.

5. Wischvorrichtung nach Anspruch 2 oder 3, **dadurch gekennzeichnet, dass** die Empfangsspule (29) auf einer Versteifungsleiste (11) des Wischerblattes (3) am Verbinder (15) angeordnet ist.

6. Vorrichtung nach einem der Ansprüche 2 bis 4, **dadurch gekennzeichnet, dass** die Sendespule (27) in der Traggabel (8) umspritzt ist, und dadurch, dass die Empfangsspule (29) im Verbinder (15) umspritzt ist.

7. Vorrichtung nach einem der Ansprüche 1 bis 6, **dadurch gekennzeichnet, dass** die Empfangsspule (29) an das elektrische Element (23) elektrisch angeschlossen ist.

8. Vorrichtung nach einem der Ansprüche 1 bis 7, **dadurch gekennzeichnet, dass** das elektrische Element (23) ein Heizelement (25) ist, insbesondere ein Widerstand oder eine Keramik mit positivem Temperaturkoeffizienten.

9. Vorrichtung nach einem der Ansprüche 1 bis 7, **dadurch gekennzeichnet, dass** das elektrische Element (23) einen Messsensor umfasst.

10. Antriebsarm (7) für eine Wischvorrichtung (1) nach einem der Ansprüche 1 bis 9, welcher dafür ausgelegt ist, eine Wischbewegung zu übertragen, und an einem Ende eine Traggabel (8) aufweist, **dadurch gekennzeichnet, dass** die Traggabel (8) mit einer Sendespule (27) ausgestattet ist, die es ermöglicht, eine Stromversorgung durch elektrische Induktion sicherzustellen.

11. Scheibenwischerblatt für eine Wischvorrichtung nach einem der Ansprüche 1 bis 9, welches einen Verbinder (15) umfasst, der an dem Scheibenwischerblatt (3) befestigt ist, wobei der Verbinder an einem Adapter anlenkbar ist, der am Längsende (8) eines Scheibenwischerarmes befestigt ist, wobei das Wischerblatt mit wenigstens einem elektrischen Element (23) ausgestattet ist, wobei das Wischerblatt eine Empfangsspule umfasst, die am Verbinder (15) angeordnet ist und ermöglicht, eine Stromversorgung des elektrischen Elements (23) durch magnetische Induktion sicherzustellen, wobei die Empfangsspule an das elektrische Element (23) über Leitungsdrähte (37) elektrisch angeschlossen ist, **dadurch gekennzeichnet, dass** die Empfangsspule (29) auf der Unterseite (33) des Verbinders (15) angeordnet ist, das heißt an der Seite gegenüber dem Wischerblatt (3).

## Claims

1. Wiping device (1) comprising
- a driving arm (7) configured to transmit a sweeping movement and having a longitudinal end (8),
- a wiper blade (3),
- a fixing device (5) disposed between the longitudinal end (8) of the arm (7) and the wiper blade (3),
in which the blade (3) is equipped with at least one electrical element (23), **characterized in that** the longitudinal end (8) of the arm (7) is equipped with an emitting coil (27) and **in that** the blade (3) is equipped, at the fixing device (5) with a receiving coil (29), the cooperation of the emitting coil (27) with the receiving coil (29) making it possible to ensure the power supply of said electrical element (23) by magnetic induction.

2. Wiping device according to Claim 1, **characterized in that** the fixing device (5) comprises an adapter (13) intended to be fixed to the longitudinal end (8) of the arm (7) and a connector (15) articulated on the adapter and intended to be fixed to the wiper blade (3), and **in that** the receiving coil is borne by the adapter (13) or the connector (15).

3. Wiping device according to Claim 1 or 2, **characterized in that** the longitudinal end (8) of the arm (7) is in the form of a support yoke and the emitting coil (27) is disposed on the bottom face (31) of the support yoke (8) facing the adapter (13).

4. Device according to Claim 2 or 3, **characterized in that** the receiving coil (29) is disposed on a bottom face (33) of the connector (15) facing the blade (3).

5. Wiping device according to Claim 2 or 3, **characterized in that** the receiving coil (29) is disposed on a spine (11) of the blade (3) at the connector (15).

6. Device according to any one of Claims 2 to 4, **characterized in that** the emitting coil (27) is overmoulded in the support yoke (8) and **in that** the receiving coil (29) is overmoulded in the connector (15).

7. Device according to any one of Claims 1 to 6, **characterized in that** the receiving coil (29) is connected electrically to the electrical element (23) .

8. Device according to any one of Claims 1 to 7, **characterized in that** the electrical element (23) is a heating element (25), notably a resistor or a ceramic with positive temperature coefficient.

9. Device according to any one of Claims 1 to 7, **characterized in that** the electrical element (23) comprises a measurement sensor.

10. Driving arm (7) for a wiping device (1) according to any one of Claims 1 to 9, configured to transmit a sweeping movement and, at one end, a support yoke (8), **characterized in that** the support yoke (8) is equipped with an emitting coil (27) making it possible to ensure an electrical power supply by magnetic induction.

11. Wiper blade for a wiping device according to any one of Claims 1 to 9, comprising a connector (15) fixed to the wiper blade (3), the connector being able to be articulated on an adapter fixed to the longitudinal end (8) of a wiper arm, said blade being equipped with at least one electrical element (23), said blade comprising a receiving coil disposed at the connector (15) and making it possible to ensure an electrical power supply by magnetic induction of the electrical element (23), the receiving coil being connected electrically to the electrical element (23) by electrical wires (37), **characterized in that** said receiving coil (29) is disposed on the bottom face (33) of the connector (15), that is to say on the face facing the blade (3).
